# EUROPÄISCHE PATENTANMELDUNG

(11) **EP 1 047 020 A2**
(43) Veröffentlichungstag der Anmeldung: **25.10.2000**
(21) Anmeldenummer: 00201381.1
(22) Anmeldetag: 17.04.2000
(51) Int. Cl.: G06T 9/00

(54) **Anordnung zur Transformation von Bild-Daten**

(30) Priorität: 24.04.1999 DE 19918662
(71) Anmelder: Philips Corporate Intellectual Property GmbH, 52064 Aachen (DE); Koninklijke Philips Electronics N.V., 5621 BA Eindhoven (NL)
(72) Erfinder: Hoppe, Dirk, Philips Corporate Intell. Prop. GmbH, 52064 Aachen (DE); Götting, Detlef, Philips Corp. Intell. Prop. GmbH, 52064 Aachen (DE)
(74) Vertreter: Volmer, Georg, Dipl.-Ing.

(57) **Zusammenfassung**

Bei einer Anordnung zur Transformation von Bild-Daten unter Einsatz eines Verfahrens zur zweidimensionalen hierarchischen Subband Zerlegung, insbesondere einer zweidimensionalen Discrete Wavelet Transformation (2-D DWT), bei dem Bilder, ggf. in mehreren Ebenen, mittels Filterung in Subbänder zerlegt werden, ist für einen minimalen Speicherbedarf, für eine minimale Busbelastung und für eine optimale 2-D DWT Transformation vorgesehen, daß ein Bildspeicher (41) vorgesehen ist, in welchem vor Beginn der ersten Ebene der Transformation die Bild-Daten eines Bildes gespeichert sind und in welchem nach der ersten Transformationsebene die Daten eines weiter zu transformierenden Subbands gespeichert werden, wobei die Bild-Daten des Bildes teilweise überschrieben werden,
daß in dem Bildspeicher (41) nach jeder weiteren Transformationsebene jeweils die Daten eines ggf. weiter zu zerlegenden Subbands gespeichert werden,
daß ein Subbandspeicher (44) vorgesehen ist, in welchem nach einem Transformationsvorgang einer Ebene die bei dieser Transformation gewonnenen Daten derjenigen Subbänder, welche nicht mehr in weiteren Transformationsebenen weiter zu zerlegen sind, gespeichert werden, wobei die Daten dieser Subbands aneinander angrenzend gespeichert werden und wobei in dem Subbandspeicher (44) ggf. bereits gespeicherte, in vorhergehenden Transformationsebenen ermittelte Subband-Daten nicht überschrieben werden,
daß in den Transformationsebenen jeweils die Bild-Daten des Bildes bzw. die in der letzten Transformationsebene gespeicherten Subband-Daten aus dem Bildspeicher gelesen werden,
   wobei die Daten jeweils in Blöcken (32) ausgelesen werden, welche einen Basisblock (33), der eine Größe entsprechend des zu transformierenden Bildteils bzw. Subbands aufweist, und einen diesen umgebenden Rahmen (34) aufweisen, welcher eine Breite entsprechend der halben maximalen Filtertiefe der bei der Transformation eingesetzten Filter (12, 13, 18, 19, 22, 23) aufweist
und daß alle Basisblöcke (33) zusammen alle Bildpunkte der Bild- bzw. Subband-Daten des Bildspeichers (41) erfassen.

## Beschreibung

Bei der digitalen Fotografie einzelner Bilder, d.h. also unbewegter Standbilder, besteht das Problem, daß die dabei anfallenden Datenmengen sehr groß sind. Dies gilt insbesondere dann, wenn sich die Auflösung der digitalen Fotografie der chemischen Fotografie annähern soll. Ein bekannter Standard zur Datenkompression von Standbildern ist der JPEG-Standard. Dieser Standard erreicht noch nicht hinreichend große Datenreduktionsraten und hat darüber hinaus den Nachteil, daß eine Datenreduktion in festen Bildblöcken, beispielsweise von 8 x 8 Bildpunkten, vorgenommen wird, die bei starker Kompression in dem rekonstruierten Bild als Artefakte erkennbar sind.

Zur Erzielung höherer Kompressionsraten ist die Discrete Wavelet Transformation, die im folgenden als DWT bezeichnet wird, bekannt. Diese hat sich als eine leistungsfähige Methode in der Bildcodierung und Kompression etabliert. Bei der Wavelet Transformation der Bilddaten werden sogenannte Waveletkoeffizieten oder auch Subbänder erzeugt, die nachfolgend quantisiert und entropycodiert werden können. Der daraus resultierende komprimierte Datenstrom kann zur Übertragung oder Speicherung benutzt werden. Die DWT ist die Basis für zukünftige Kompressionsstandards, wie z.B. JPEG 2000, und stellt eine Alternative zur bekannten Discreten Kosinustransformation (DCT) dar. In der Bildverarbeitung kommt die sogenannte Zwei-dimensionale Discrete Wavelet Transformation, die im folgenden als 2-D DWT bezeichnet wird, zum Einsatz. Diese kann verstanden werden als aufeinanderfolgende Anwendung einer eindimensionalen Wavelet Transformation jeweils auf die horizontale und die vertikale Richtung.

Im Stand der Technik sind im wesentlichen die folgenden Ansätze bekannt:

Zum einen kann die 2-D DWT durch vollständige zweimalige aufeinanderfolgende Anwendung einer einfachen DWT in horizontaler und vertikaler Richtung durchgeführt werden. Daraus resultiert jedoch die Notwendig der Zwischenspeicherung der Daten der Subbänder zwischen erster und zweiter Transformationsstufe; es entsteht also ein erheblicher Speicherbedarf. Ferner erhöht sich die Busbelastung, auf der die Daten hin und her kopiert werden, um wenigstens den Faktor 2.

Ferner besteht die Möglichkeit eine direkte 2-D DWT durchzuführen, bei der die Transformation in einem Schritt durchgeführt wird. Hierdurch wird zwar die Busbelastung verringert, es stellt sich dabei jedoch das Problem, daß ein größerer Teil des Bildes gleichzeitig zur Transformation zur Verfügung stehen muß, also bei der Verarbeitung intern gespeichert werden muß. Dabei werden in dem Stand der Technik oftmals Zeilenspeicher oder andere eingesetzt. Hierbei besteht das Problem, daß die Größe der internen Pufferspeicher die Grenze für die maximal zu verarbeitende Bildauflösung begrenzt und daß diese Zwischenspeicher als zusätzliche Speicher erforderlich sind.

Wird die Transformation in mehrfacher, iterativer Weise durchgeführt, wobei die einzelnen Subbänder, die in einer Transformation ermittelt wurden, immer wieder zwischengespeichert werden, erhöht sich der Speicherbedarf des Ausgangsbildes um etwa ein Viertel. Die Teilbilder werden dabei zurück in den Bildspeicher geschrieben. Der Bildspeicher muß dann jedoch für die höhere Bittiefe ausgelegt werden. Da beim Rückschreiben der Teilbilder in den Bildspeicher nur Bilddaten überschrieben werden können, die nicht mehr für weitere Transformationen benötigt werden, können die Teilbilder nur stark fragmentiert im Speicher abgelegt werden. Eine gegebenenfalls vorzunehmende nachträgliche Umsortierung erhöht im hohen Maße die Busauslastung, den Speicherbedarf für die Zwischenpufferung und die Rechenzeit.

Es ist Aufgabe der Erfindung, eine Anordnung zur Transformation von Bild-Daten anzugeben, die sich für die zweidimensionale Discrete Wavelet Transformation eignet und die eine minimale Belastung des Speicherbusses erzeugt, bei der der Gesamtspeicherbedarf minimal gehalten wird, bei der die Auflösung des zu verarbeitenden Bildes nicht durch interne Registergrößen dimittiert wird und deren Architektur eine verlustlose Transformation ermöglicht.

Diese Aufgabe wird erfindungsgemäß dadurch gelöst, daß ein Bildspeicher vorgesehen ist, in welchem vor Beginn der ersten Ebene der Transformation die Daten eines Bildes gespeichert sind und in welchem nach der ersten Transformationsebene die Daten eines weiter zu transformierenden Subbands gespeichert werden, wobei die Bild-Daten des Bildes teilweise überschrieben werden,
daß in dem Bildspeicher nach jeder weiteren Transformationsebene jeweils die Daten eines ggf. weiter zu zerlegenden Subbands gespeichert werden,
daß ein Subbandspeicher vorgesehen ist, in welchem nach einem Transformationsvorgang einer Ebene die bei dieser Transformation gewonnenen Daten derjenigen Subbänder, welche nicht mehr in weiteren Transformationsebenen weiter zu zerlegen sind, gespeichert werden, wobei die Daten dieser Subbands aneinander angrenzend gespeichert werden und wobei in dem Subbandspeicher ggf. bereits gespeicherte, in vorhergehenden Transformationsebenen ermittelte Subband-Daten nicht überschrieben werden,
daß in den Transformationsebenen jeweils die Daten des Bildes bzw. die in der letzten Transformationsebene gespeicherten Subband-Daten aus dem Bildspeicher gelesen werden,
   wobei die Daten jeweils in Blöcken ausgelesen werden, welche einen Basisblock, der eine Größe entsprechend des zu transformierenden Bildteils bzw. Subbands aufweist, und einen diesen umgebenden Rahmen aufweisen, welcher eine Breite entsprechend der halben maximalen Filtertiefe der bei der Transformation eingesetzten Filter aufweist
und daß alle Basisblöcke zusammen alle Bildpunkte der Bild- bzw. Subband-Daten des Bildspeichers erfassen.

Bei der erfindungsgemäßen Anordnung sind zwei Speicher vorgesehen, nämlich ein Bildspeicher und ein Subbandspeicher. Der Bildspeicher ist dazu vorgesehen, vor Beginn der ersten Ebene der Transformation Bild-Daten des zu transformierenden Bildes aufzunehmen. In jeder nachfolgenden Transformationsebene wird in diesen Bildspeicher jeweils das Subband zurückgeschrieben, das weiter zu transformieren ist. Da in den nachfolgenden Transformationsebenen das ursprüngliche Bild bzw. die in dem Bildspeicher in den vorherigen Transformationsebenen abgespeicherten Subband-Daten nicht mehr benötigt werden, kann dabei ein Überschreiben der Daten des Bildes bzw. der Daten des Subbands der vorherigen Transformationsebene erfolgen. Somit kann dieser Bildspeicher so dimensioniert werden, daß er von seiner Größe her für die Aufnahme der ursprünglichen Bilddaten ausreichend dimensioniert ist. Für die in jeder Transformationsebene abzuspeichernden Daten desjenigen Subbandes, das weiter zu transformieren ist, wird in dem Bildspeicher also kein zusätzlicher Speicherbedarf erzeugt.

In dem Subbandspeicher werden nach jedem Transformationsvorgang einer Ebene die bei dieser Transformation gewonnenen Daten derjenigen Subbänder, die nicht einer weiteren Transformation zu unterziehen sind, abgespeichert. Dabei können die Daten aneinander angrenzend gespeichert werden und sie können in geordneter Weise bzw. in gewünschter Weise in dem Subbandspeicher gespeichert werden, so daß vor dem Auslesen der Subband-Daten kein Umsortieren erforderlich ist.

Bei dem Durchführen der Transformationen in den jeweiligen Transformationsebenen werden nicht alle Daten des Bildes bzw. des in dem Bildspeicher gespeicherten, weiter zu transformierenden Subbandes aus dem Bildspeicher ausgelesen, sondern die Daten werden nur in Blöcken ausgelesen und die Transformation wird für Daten dieser Blöcke vorgenommen. Um jedoch sicherzustellen, daß diese Blockstruktur den Transformationsvorgang nicht beeinflußt, also keine Blockstruktur oder ähnliche Störungen in dem rekonstruierten Bild auftreten, sind die Blöcke so ausgelegt, daß sie jeweils einen Basisblock beinhalten, der eine Größe entsprechend des zu transformierenden Bildteils bzw. Subbandes aufweist. Dieser Basisblock beinhaltet also denjenigen Teil des zu transformierenden Bildes bzw. Subbandes, das transformiert werden soll. Zusätzlich ist dieser Basisblock von einem Rahmen umgeben, der zu allen Seiten hin so viele Bildpunkte beinhaltet, daß diese der maximalen halben Filtertiefe der bei der Transformation eingesetzten Filter aufweist. Damit ist sichergestellt, daß der Transformationsvorgang, der auf den gesamten Block angewendet wird, so vorgenommen wird, daß die Transformation für die Daten des Basisblockes ohne störende Effekte durch den Block vorgenommen werden können. Die Transformation für die Bildpunkte in den Basisblöcken ist also von der Blockstruktur vollständig unbeeinflußt und somit ideal.

Im Ergebnis ist damit erreicht worden, daß zwar eine Transformation in Blöcken vorgenommen werden kann und somit interner Speicherbedarf bei der Transformation reduziert werden kann, daß jedoch durch diese Transformation in Blöcken keine Beeinflussung des eigentlichen Transformationsvorgangs stattfindet und insbesondere keine Störungen bzw. Blockstruktur in dem rekonstruierten Bild sichtbar werden.

Im Ergebnis wird durch die erfindungsgemäße Anordnung erreicht, daß eine Speicherung der Daten der Subbänder ohne zusätzliche Datenumsortierung möglich ist und daß keine Speicherfragmentierung erfolgt. Es ist nur eine minimale Anzahl von Speicherzugriffen mit minimaler Busbelastung erforderlich. Es ist kein zusätzlicher Zwischenspeicher für das weiter zu transformierende Subband erforderlich, da dieses den Bildspeicher mit nutzen kann, ohne daß dieser dafür vergrößert werden muß. Ferner wird die Auflesung der zu verarbeitenden Bilder nicht durch die Größen interner Register begrenzt, da diese nicht vorhanden sind. Durch die blockweise Transformation wird zwar Speicher innerhalb der Anordnung gespart, es entstehen jedoch keine zusätzlichen Fehler oder Artefakte.

Nach einer Ausgestaltung der Erfindung gemäß Anspruch 2 wird das zu transformierende Bild bzw. Subband so in die Blöcke, innerhalb derer die Transformation vorgenommen wird, zerlegt, daß die Basisblöcke jeweils aneinander angrenzen. Dies ist erforderlich, da eine gültige Transformation jeweils nur für die Daten innerhalb der Basisblöcke vorgenommen werden kann. Ferner sind die Blöcke in mehreren Reihen oder Abtastzeilen angeordnet.

Bei der Anwendung der Anordnung für eine zweidimensione Discrete Wavelet Transformation, im folgenden als 2-D DWT bezeichnet, ist die Anordnung besonders vorteilhaft, da für die Rückspeicherung desjenigen LL-Subbands, das weiter zu transformieren ist, in dem Bildspeicher kein zusätzlicher Speicherbedarf anfällt und da die übrigen, nicht weiter zu transformierenden Subbänder jeder Transformationsebene in geordneter Weise in dem Subbandspeicher abgelegt werden können.

Wie gemäß einer weiteren Ausgestaltung nach Anspruch 4 vorgesehen ist, können der Bildspeicher und der Subbandspeicher vorteilhaft gemeinsam aufgebaut sein. Sie sind zwar von der Organisation her wie oben erläuert, getrennt zu handhaben, können aber vorteilhaft physikalisch in einem Speicher realisiert sein.

Eine weitere Ausgestaltung der Erfindung gemäß Anspruch 5 liefert darüber hinaus den Vorteil, daß die in einer jeweiligen Transformationsebene in dem Subbandspeicher abgespeicherten Subbanddaten bereits nach Beendigung dieser Transformationsebene und vor Beginn der nächsten Transformationsebene aus dem Subbandspeicher abrufbar sind, um sie gegebenenfalls weiter zu verarbeiten.

Die Erfindung betrifft weiterhin eine Anordnung zur inversen Transformation von Bild-Daten, insbesondere zur inversen 2-D DWT nach Anspruch 6. Dabei ist eine ähnliche Struktur wie bei der erfindungsgemäßen Anordnung zur Transformation nach Anspruch 1 vorgesehen. Es ist ebenfalls ein Subbandspeicher und ein Bildspeicher vorgesehen, wobei in den Bildspeicher vor Durchführung der inversen Transformation dasjenige Subband eines rückzutransformierenden Bildes gespeichert wird, das bei der Transformation als letztes nicht mehr weiter zu transformierendes Subband erzeugt wurde. In dem Subbandspeicher werden vor Durchführung der inversen Transformation alle übrigen Subbänder des Bildes gespeichert. Bei Durchführung der inversen Transformation werden dann die in dem Subbandspeicher gespeicherten Subbänder in der vorgegebenen Reihenfolge und gegebenenfalls unter Anwendung von Skalierungsfaktoren dem im Bildspeicher abgespeicherten Subband aufaddiert. Dabei wird das in jeder neuen inversen Transformationsebene erzeugte Additionsergebnis neu in den Bildspeicher geschrieben, so daß dort vorher gespeicherte Daten überschrieben werden.

Die Struktur der beiden Speicher in der Anordnung erweist sich also auch für eine Anordnung zur inversen Transformation als vorteilhaft.

Nachfolgend wird ein Ausführungsbeispiel der Erfindung näher erläutert. Es zeigen:
Fig. 1 eine Skizze eines logischen Ablaufs einer Durchführung einer 2-D DWT einer nachfolgenden Quantisierung und Entropycodierung sowie der Umkehrung dieser Vorgänge,
Fig. 2 ein Blockschaltbild zur Verdeutlichung der Vorgänge bei einer 2-D DWT innerhalb einer Transformationsebene,
Fig. 3 eine schematische Darstellung eines Mallat Trees,
Fig. 4 eine schematische Darstellung eines zu transformierenden Bildes oder Subbandes in Blöcke,
Fig. 5 eine schematische Darstellung der erfindungsgemäßen Anordnung mit zwei Speichern und
Fig. 6 eine schematische Darstellung zur Verdeutlichung der überlappenden Bereiche der Blöcke in Abhängigkeit von der Blockgröße.

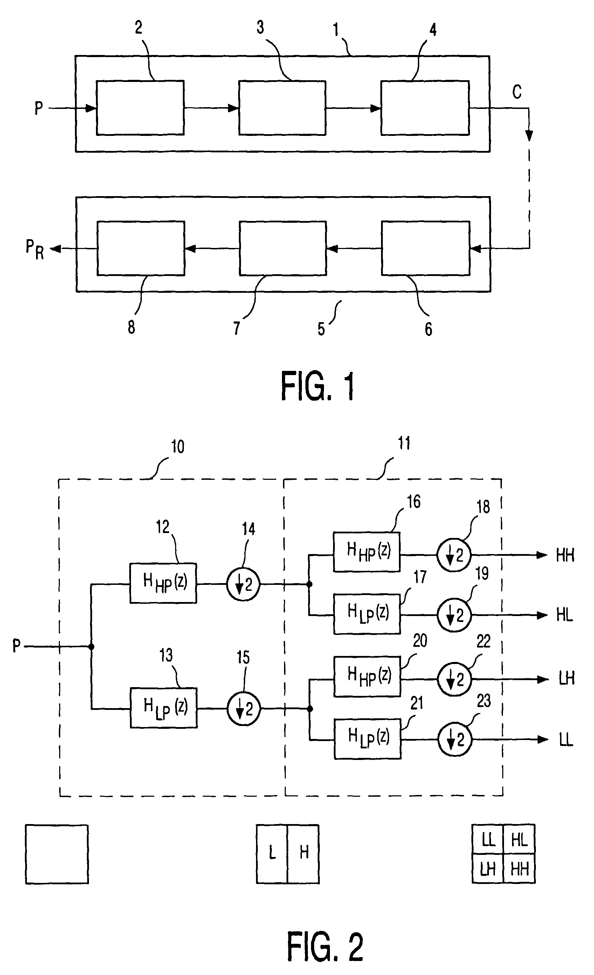

Fig. 1 zeigt eine schematische Darstellung, welche die Bedeutung der 2-D DWT und der inversen entsprechenden Transformationen für die Erzeugung komprimierter Daten verdeutlicht. Der Block 1 der Darstellung in Fig. 1 beinhaltet drei im folgenden zu erläuternde Vorgänge, die dazu führen, daß die Daten eines ursprünglichen Bildes P in stark komprimierte Daten C umgewandelt werden. Dazu ist innerhalb des Blockes 1 zunächst eine 2-D DWT Transformation vorgesehen, die in der Figur durch den Block 2 symbolisiert ist. Dabei wird das Bild quasi in ein anderes Basissystem transformiert, um eine Dekorrelation der Bildinformation vorzunehmen. Dieser Vorgang ist vollständig reversibel und daher verlustlos. Die eigentliche Datenreduktion wird bei der nachfolgenden Quantisierung, die in der Darstellung gemäß Fig. 1 durch den Block 3 symbolisiert ist, vorgenommen. Dabei wird der Informationsgehalt reduziert. Schließlich wird eine Entropycodierung, die durch einen Block 4 symbolisiert ist, durchgeführt. Dabei wird eine verlustlose Codierung des quantisierten Bildinhalts vorgenommen. Es wird also der Datenstrom minimiert, ohne eine Reduktion des Bildinhalts vorzunehmen.

Der in der Fig. 1 in Form eines Blockes 5 symbolisierte Decoder arbeitet im umgekehrten Sinne. Nachdem in einem Block 6 der codierte Datenstrom decodiert worden ist, wird in einem Block 7 eine inverse Quantisierung vorgenommen, es wird also die Originalskalierung wieder hergestellt. Die nachfolgend in einem Block 8 vorzunehmende inverse Transformation stellt das Originalbasissystem des Bildes wieder her.

Fig. 2 zeigt ein schematisches Blockschaltbild der Vorgänge, die innerhalb einer Transformationsebene einer zweidimensionalen Discrete Wavelet Transformation, 2-D DWT, vorgenommen werden. Die Daten eines zu transformierenden Bildes oder Subbands P werden einer ersten Filterbank 10 zugeführt, in welcher eine Transformation zunächst in einer Richtung, in dem Beispielsfall gemäß Fig. 2 der horizontalen Richtung, durchgeführt. In einer nachgeschalteten zweiten Filterbank 11 wird eine Filterung in der entgegengesetzten Richtung, also in dem Beispielsfall gemäß Fig. 1 der vertikalen Richtung, vorgenommen. In jeder Filterstufe sind Hochpaßfilter H_{HP} und Tiefpaßfilter H_{LP} vorgesehen. In der ersten Filterbank 10 wird zunächst eine Filterung in horizontaler Richtung vorgenommen, wobei das Bild in hochfrequente und niederfrequente Anteile zerlegt wird. Ein in der ersten Filterbank 11 vorgesehenes Hochpaßfilter 12 erzeugt die hochfrequenten Anteile und ein ferner vorgesehenes Tiefpaßfilter 13 die niederfrequenten Anteile. Die so erzeugten Anteile werden einem Downsampling unterzogen, wozu entsprechende Anordnungen 14 bzw. 15 vorgesehen sind.

Die mittels der ersten Filterstufe erzeugten niederfrequenten und hochfrequenten Anteile werden in der zweiten Filterbank 11 jeweils in vertikaler Richtung nochmals in jeweils hochfrequente und niederfrequente Anteile zerlegt. Außerdem wird auch hier ein Downsampling um den Faktor 2 vorgenommen. Die hochfrequenten Anteile, die die erste Filterbank 10 liefert, werden mittels eines Hochpaßfilters 16 und eines Tiefpaßfilters 17 nochmals in hochfrequente Anteile bzw. niederfrequente Anteile zerlegt. Nach wiederum vorgesehenen Downsampling-Anordnungen 18 und 19 entstehen somit die Subbänder HH und HL. Dabei steht jeweils der erste Buchstabe für die Filterung in horizontaler Richtung und der zweite Buchstabe für die Filterung in vertikaler Richtung. Es handelt sich hier also um diejenigen Subbänder, bei denen zuerst eine Hochpaßfilterung in horizontaler Richtung und anschließend eine Hochpaßfilterung bzw. Tiefpaßfilterung in vertikaler Richtung vorgenommen wurde.

In entsprechender Weise sind ein weiteres Hochpaßfilter 20, ein weiteres Tiefpaßfilter 21 und zwei Downsampling-Anordnungen 22 und 23 vorgesehen, mittels derer aus den niederfrequenten Anteilen, die die erste Filterbank 10 liefert, in entsprechender Weise die Subbänder LH und LL erzeugt werden.

Im Ergebnis ist also nach der Durchführung der Transformation in einer Transformationsebene, wie sie in Fig. 2 dargestellt ist, ein Eingangs-Datenstrom, bei dem es sich um das ursprüngliche Bild oder Blöcke des ursprünglichen Bildes oder ein weiter zu zerlegendes Subband oder dessen Blöcke handeln kann, in vier Subbänder HH, HL, LH und LL zerlegt worden. Bei der 2-D DWT werden die Subbänder HH, HL und LH nicht weiter zerlegt, sondern abgespeichert, worauf im weiteren noch einzugehen sein wird. Das Subband LL hingegen wird in mehreren Transformationsebenen weiter zerlegt. Dabei werden dann also die Daten des Subbandes LL in einer Transformationsebene entsprechend der Darstellung gemäß Fig. 2 wiederum in vier Subbänder zerlegt, von denen gegebenenfalls das dann neu erzeugte LL-Subband in einer nachfolgenden Transformationsebene weiter zerlegt werden kann.

Auf der Decoderseite kann übrigens diese Transformation vollständig rückgängig gemacht werden, indem die übertragenen und rücktransformierten Subbänder dem LL-Band jeweils nach und nach aufaddiert werden.

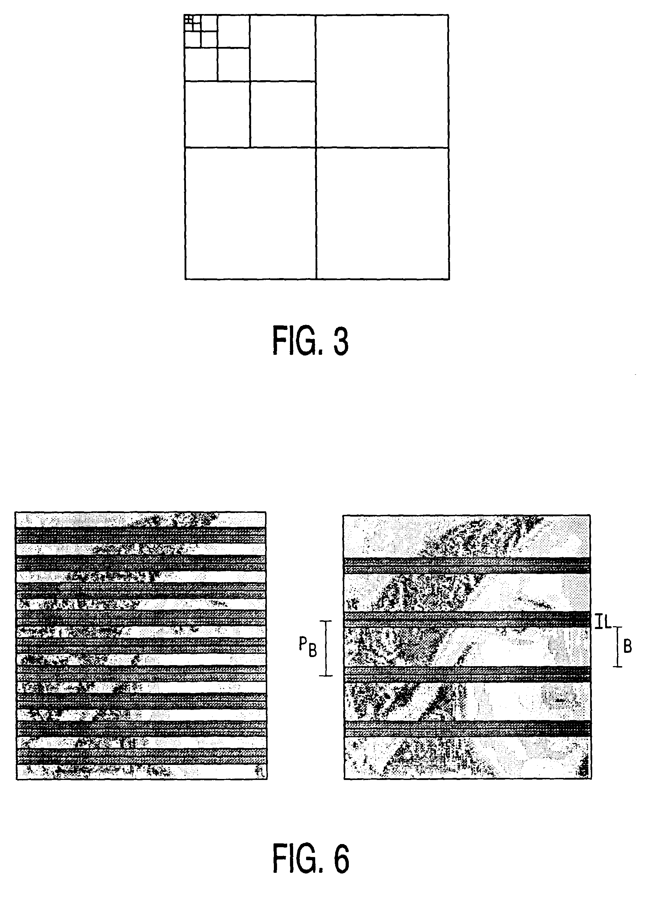

Die schematische Darstellung gemäß Fig. 3 zeigt die entstehende Struktur der Subbänder nach Durchführung mehrerer Transformationsebenen in der 2-D DWT. Die drei großen Quadrate links unten, rechts unten und oben rechts symbolisieren in einer ersten Transformationsebene erzeugte Subbänder, die nicht weiter zerlegt werden. In dem oberen linken Quadrat war nach der Durchführung der ersten Transformationsebene ebenfalls ein entsprechendes Quadrat, das das in dieser Transformationsebene erzeugte LL-Band symbolisierte, vorhanden. In einer weiteren Transformationsebene wurde jedoch dieses LL-Band wiederum zerlegt. Es entstanden dabei durch das Downsampling nun wiederum vier Quadrate, jedoch jeweils mit halber Seitenlänge gegenüber den Qudraten der ersten Transformationsebene. Auch nach dieser Transformationsebene wurde das dabei erzeugte LL-Band weiter zerlegt.

Die Fig. 3 zeigt also die entstehende Struktur der Daten der Subbänder nach mehreren Transformationsebenen.

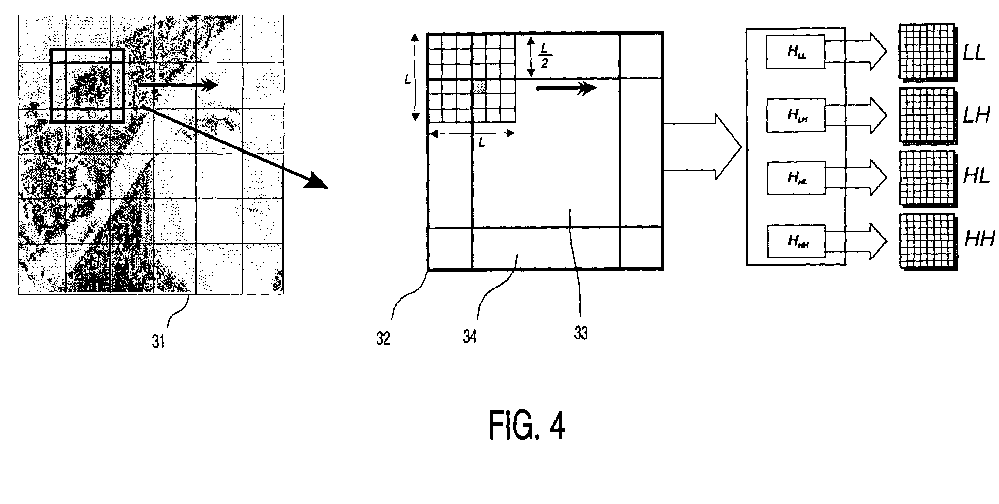

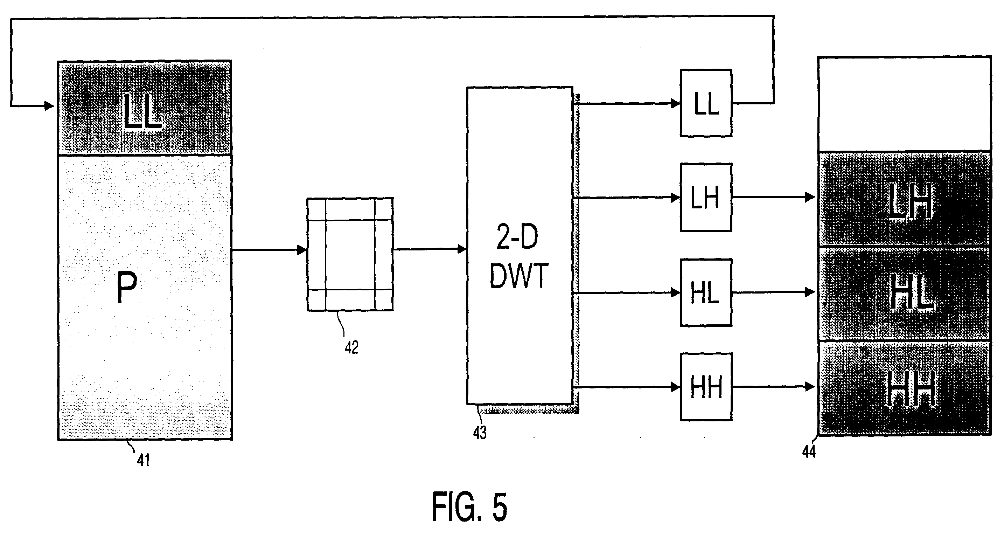

Daß die Subbänder einen immer kleineren Teil der übertragenen Daten einnehmen, ist durch die Durchführung eines Downsamplings bei jeder Transformationsebene bedingt. Die erfindungsgemäße Anordnung soll nun zur Durchführung einer 2-D DWT eine möglichst einfache Architektur schaffen, mit der die 2-D DWT möglichst einfach vorgenommen werden kann, bei der möglichst wenig Daten während des Transformationsgangs hin und her kopiert werden müssen und bei der insgesamt möglichst geringer Speicherbedarf erforderlich ist. Um dieses zu erreichen, sind im wesentlichen zwei Maßnahmen vorgesehen, die im nachfolgenden anhand der Fig. 4 und 5 erläutert werden. Zum einen ist eine Zerlegung eines zu transformierenden Bildes oder Subbands in Blöcke vorgesehen, wie dies nachfolgend anhand Fig. 4 erläutert werden wird. Dabei wird diese erfindungsgemäße Zerlegung in Blöcken innerhalb der Anordnung jedoch in der Weise vorgenommen, daß dadurch keinerlei Artefakte oder Störung des 2-D DWT-Vorgangs erfolgt. Fig. 5 zeigt dann, wie die Daten des zu zerlegenden Bildes bzw. Teilbandes und die jeweils in einer Transformationsebene erzeugten Subband-Daten optimal in den Speichern zu handhaben sind.

Fig. 4 zeigt in schematischer Darstellung zunächst einen Block 31, bei dem es sich um ein zu zerlegendes Bild handelt, bei dem es sich aber auch um die Daten eines Subbands einer vorherigen Transformationsebene handeln kann. Der Block 31 ist in n x m, in diesem Beispiel in 6 x 6, quadratische Blöcke unterteilt, die die erfindungsgemäßen Basisblöcke darstellen.

Bei der erfindungsgemäßen Anordnung wird eine blockweise Transformation der Daten des Bildes oder Subbands 31 in der Weise vorgenommen, daß alle Daten des Bildes oder Subbands 31 in Basisblöcke zerlegt werden. Diese Basisblockstruktur ist in dem Block 31 eingetragen. Um jedoch bei der 2-D DWT dieser Blöcke keine Störungen durch die Blockstruktur entstehen zu lassen, ist jeder dieser Basisblöcke von einem Rahmen umgeben, wie dies anhand eines weiteren in der Fig. 4 dargestellten Blockes 32 verdeutlicht ist. Der Block 32 gemäß Fig. 4 zeigt einen Basisblock 33 und einen diesen umgebenden Rahmen 34. Die Bildpunkte des Basisblockes 33 sind diejenigen, die nachfolgend einer symbolisch angedeuteten 2-D DWT zu unterziehen sind, bei der die Subbänder HH, HL, LH und LL erzeugt werden, die gegebenenfalls in einer weiteren Transformationsebene weiter zerlegt werden können.

Damit jedoch bei der 2-D DWT dieser Bildpunkte des Basisblocks 33 keine Störungen durch die Blockstruktur auftreten, ist der Basisblock 33 von einem Rahmen 34 umgeben, der jeweils in vertikaler und horizontaler Richtung angrenzend an den Basisblock so viele Bildpunkte aufweist, daß eine störungsfreie 2-D DWT Transformation der Bildpunkte des Basisblocks gewährleistet ist. Dies ist dann der Fall, wenn die Breite des Rahmens L/2, wie in der Figur angedeutet, beträgt. Dabei wird als L diejenige Filtertiefe eingesetzt, die die Filter aufweisen, die bei der 2-D DWT eingesetzt werden. Beispielsweise in der Darstellung gemäß Fig. 2 weisen also die dort dargestellten Filter 12, 13, 14, 17, 20 und 21 maximal eine Filtertiefe L auf. Dann ist die Breite des Rahmens L/2 entsprechend der Darstellung gemäß Fig. 4 zu wählen.

Im Ergebnis ist damit gelungen, daß jeweils in einer Ebene zu transformierende Bild bzw. Subband in Blöcken zu transformieren, ohne daß durch diese Blockstruktur irgendwelche negativen Effekte, insbesondere Artefakte, auftreten. Damit ist der bei der Transformation erforderliche Speicherbedarf innerhalb der Anordnung minimal und es müssen innerhalb der Anordnung keine Zwischenspeicher vorgesehen sein, die einerseits zusätzlichen Aufwand bedeuten und die andererseits die Transformationsgenauigkeit durch ihren begrenzten Speicherumfang begrenzen könnten und ferner müssen wenig Daten während des Transformationsvorgangs hin und her kopiert werden. Die Darstellung des Blockes 31 gemäß Fig. 4 zeigt, daß die Blöcke zunächst in horizontaler Richtung von links nach rechts über das Bild strukturiert sind. Diese Blöcke sind also in Form einer Zeile angeordnet. Wird der rechte Bildrand erreicht, wird im darunter angrenzenden Bereich links wieder durch mehrere Blöcke eine Zeile gebildet. Entscheidend dabei ist, daß die Basisblöcke aller dieser Blöcke alle Bildpunkte des zu transformierenden Bildes bzw. Subbands erfassen.

Durch den Umstand, daß die Basisblöcke jeweils von den Rahmen umgeben sind, hat zwar zur Folge, daß Teile des Bildinhaltes mehrfach für Transformationsvorgänge einzulesen sind, dieser Nachteil wiegt jedoch relativ gering verglichen mit dem Vorteil, daß immer nur ein Teil des Bildinhaltes in einem Transformationsvorgang transformiert werden muß. Auf die mehrfach einzulesenden Bildinhalte und die überlappenden Bereiche der Blöcke wird anhand der Erläuterung von Fig. 6 näher eingegangen werden.

Nachfolgend soll anhand einer schematischen Darstellung der Fig. 5 die Speicherverwaltung bzw. Speichergestaltung innerhalb der erfindungsgemäßen Anordnung näher erläutert werden.
Innerhalb der Anordnung ist ein Bildspeicher 41 vorgesehen, in den vor Beginn der ersten Transformationsebene die Daten eines Bildes P gespeichert werden. Es wird dann eine blockweise Transformation dieser Daten vorgenommen, wobei in der Darstellung gemäß Fig. 5 ein Block mit Basisblock und Rahmen als Block 42 angedeutet ist. In einem in Fig. 5 angedeuteten Schaltungsblock 43 wird nachfolgend die 2-D DWT blockweise vorgenommen. Es werden jeweils die vier Subbänder HH, HL, LH und LL erzeugt, von denen die in nachfolgenden Transformationsebenen nicht weiter zu transformierenden Subbänder HH, HL und LH in einem Subbandspeicher 44 gespeichert werden. Ein in der ersten Transformationsebene erzeugtes Subband LL wird hingegen in dem Bildspeicher 41 abgespeichert, da dieses Subband in der nachfolgenden Transformationsebene weiter zu zerlegen ist. Dabei werden jedoch Teile der Bilddaten des Bildes P in dem Bildspeicher 41 überschrieben, da in der zweiten Transformationsebene auf diese Daten nicht mehr zugegriffen werden muß. Es entsteht also der Vorteil, daß der Bildspeicher 41 nur so ausgelegt sein muß, daß er die Daten des Bildes P aufnehmen kann.

Die Darstellung gemäß Fig. 5 zeigt also die Aufteilung der Daten nach der ersten Transformationsebene. Die Subbänder HH, HL, LH der ersten Transformationsebene sind in dem Subbandspeicher 44 und das weiter zu transformierende Subband LL in dem Bildspeicher 41 abgespeichert.

In einer nachfolgenden zweiten Transformationsebene, die in der Fig. 5 nicht symbolisiert ist, würden wiederum in dieser Transformationsebene erzeugte, neue Subbänder HH, HL, LH in dem noch freien Speicherbereich des Subbandspeichers 44 abgespeichert. Dabei ist zu bedenken, daß durch das Downsampling, das in vertikaler und horizontaler Richtung jeweils den Faktor 2 beträgt, diese Daten entsprechend geringeren Umfang haben, so daß der noch freie Speicherbereich in der Darstellung des Subbandspeichers 44 in der Fig. 5 für die Daten dieser Transformationsebene und aller weiteren Transformationsebenen ausreicht.

Soll das in der zweiten Transformationsebene gewonnene Subband LL weiter zerlegt werden und einer weiteren Transformation unterzogen werden, wird dieses wieder in dem Bildspeicher 41 abgespeichert. Dabei werden wiederum Teile der Daten des Subbandes LL der vorherigen Transformationsebene überschrieben.

Nach Durchführung der kompletten Transformation aller gewünschten Transformationsebenen stehen in dem Subbandspeicher 5 die Daten der Subbänder der verschiedenen Transformationsebenen in geordneter Weise zur Verfügung. Vor dem Auslesen der Daten ist also eine weitere Umsortierung der Daten dieser Subbänder nicht erforderlich. Die Daten des Subbandes LL können aus dem Bildspeicher 41 ausgelesen werden.

Im Ergebnis ist es durch diese Art der Speicherverwaltung gelungen, mit minimalem Speicherbedarf auszukommen, wobei ein Umgruppieren der Daten der Subbänder nicht erforderlich ist.

In Fig. 6 sind zwei Rahmen dargestellt, die beispielsweise die Bilddaten eines zu transformierenden Bildes darstellen. In den beiden Darstellungen sind für die Blöcke unterschiedliche Blockgrößen gewählt worden. In der linken Darstellung sind die Blöcke relativ klein, in der rechten Darstellung größer gewählt worden. In der rechten Darstellung der Fig. 6 ist die Blockgröße mit P_{B} angegeben. Es handelt sich dabei um die Gesamtgröße der Blöcke. Derjenige Teil der Blöcke, der jeweils die zu transformierenden Bilddaten beinhaltet, ist dabei in der Fig. 6 als B gekennzeichnet. Die Rahmen, die in jedem Block den Basisblock umgeben, sind entsprechend der Darstellung der Fig. 4 und deren Erläuterung jeweils mit L/2 gewählt. Wird die Blockstruktur entsprechend der in Fig. 4 erläuterten Darstellung gemäß des dort dargestellten Blockes 31 gewählt, so überlappen sich die Daten dieser Rahmen, was in der Fig. 6 in der rechten Darstellung durch den Bereich L gekennzeichnet ist, bei dem es sich um die jeweils in den benachbarten Block hineinragenden Rahmen benachbarter Blöcke handelt. Im Ergebnis handelt es sich dabei um diejenigen Datenbereiche, die für benachbarte Blöcke doppelt benötigt werden, so daß also diese Datenbereiche bei der 2-D DWT der erfindungsgemäßen Anordnung mehrfach eingelesen werden müssen, wohingegen alle anderen Daten nur einmal einzulesen sind. In der Fig. 6 sind in beiden Darstellungen diese mehrfach einzulesenden Bereiche grau schraffiert dargestellt. Die Fig. 6 zeigt, daß diese mehrfach einzulesenden Bereiche kleiner werden, wenn die Blockgröße größer gewählt wird. Andererseits ist jedoch bei größer gewählter Blockgröße der Speicherbedarf innerhalb der Anordnung zur Durchführung der blockweisen 2-D DWT größer. Es ist also zwischen beiden Faktoren abzuwägen.

Dabei bleibt jedoch zu bedenken, daß trotz der mehrfach einzulesenden Bereiche der Speicherbedarf durch die blockweise 2-D DWT Transformation deutlich verringert wird.

Zusammenfassend ist festzuhalten, daß die erfindungsgemäße Anordnung bezüglich des Speicherbedarfs und der Umgruppierung und damit der Busbelastung erhebliche Vorteile aufweist. Es wird eine geordnete Speicherung der Teilbänder vorgenommen, so daß diese nicht umsortiert werden müssen und keine Speicherfragmentierung auftritt. Es ist eine minimale Anzahl von Speicherzugriffen und damit eine minimale Busbelastung gewährleistet. Für das in einer Transformationsebene erzeugte Subband, das weiter zu transformieren ist, ist kein zusätzlicher Speicherbedarf vorhanden. Durch die blockweise Transformation wird die Zahl der Speicherzugriffe gegenüber zum Beispiel zweimaliger vollständiger Anwendung der eindimensionalen DWT deutlich verringert. Die blockweise Transformation ermöglicht die Verarbeitung beliebiger Bildauflösungen und benötigt minimal interne Puffergröße. Trotz der blockweisen Transformation findet keine Verschlechterung der Bildqualität aufgrund von zusätzlichen Randverzerrungen an Blockgrenzen statt.

Durch die gleichzeitige Nutzung der anhand der Fig. 5 erläuterten Speicherorganisation und Speichernutzung und der besonderen Durchführung der 2-D DWT in Blöcken ist eine sehr effiziente Architektur der Anordnung zur 2-D DWT Transformation realisiert worden.

## Patentansprüche

1. Anordnung zur Transformation von Bild-Daten unter Einsatz eines Verfahrens zur zweidimensionalen hierarchischen Subband Zerlegung, insbesondere einer zweidimensionalen Discrete Wavelet Transformation (2-D DWT), bei dem die Bild-Daten, ggf. in mehreren Ebenen, mittels Filterung in Subbänder zerlegt werden,
dadurch gekennzeichnet,
daß ein Bildspeicher (41) vorgesehen ist, in welchem vor Beginn der ersten Ebene der Transformation die Daten eines Bildes gespeichert sind und in welchem nach der ersten Transformationsebene die Daten eines weiter zu transformierenden Subbands gespeichert werden, wobei die Daten des Bildes teilweise überschrieben werden,
daß in dem Bildspeicher (41) nach jeder weiteren Transformationsebene jeweils die Daten eines ggf. weiter zu zerlegenden Subbands gespeichert werden,
daß ein Subbandspeicher (44) vorgesehen ist, in welchem nach einem Transformationsvorgang einer Ebene die bei dieser Transformation gewonnenen Daten derjenigen Subbänder, welche nicht mehr in weiteren Transformationsebenen weiter zu zerlegen sind, gespeichert werden, wobei die Daten dieser Subbands aneinander angrenzend gespeichert werden und wobei in dem Subbandspeicher (44) ggf. bereits gespeicherte, in vorhergehenden Transformationsebenen ermittelte Subband-Daten nicht überschrieben werden,
daß in den Transformationsebenen jeweils die Daten des Bildes bzw. die in der letzten Transformationsebene gespeicherten Subband-Daten aus dem Bildspeicher gelesen werden,
wobei die Daten jeweils in Blöcken (32) ausgelesen werden, welche einen Basisblock (33), der eine Größe entsprechend des zu transformierenden Bildteils bzw. Subbands aufweist, und einen diesen umgebenden Rahmen (34) aufweisen, welcher eine Breite entsprechend der halben maximalen Filtertiefe der bei der Transformation eingesetzten Filter (12, 13, 16, 17, 20, 21) aufweist
und daß alle Basisblöcke (33) zusammen alle Bildpunkte der Bild- bzw. Subband-Daten des Bildspeichers (41) erfassen.

2. Anordnung nach Anspruch 1, dadurch gekennzeichnet,
daß die Blöcke (32) in Abtastzeilen das in dem Bildspeicher (41) gespeicherte und zu transformierende Bild bzw. Subband erfassen, wobei die Blöcke (32) jeweils nebeneinander angeordneter Abtastzeilen mit ihren Basisblöcken (33) unmittelbar aneinander angrenzen.

3. Anordnung nach Anspruch 1, dadurch gekennzeichnet,
daß eine zweidimensionale Discrete Wavelet Transformation (2-D DWT) eingesetzt wird, bei der zur Zerlegung in Subbänder Tiefpaß- (13, 17, 21) und Hochpaßfilter (12,16,20) eingesetzt werden, daß in einer Transformationsebene ermittelte Daten eines LL-Subbands, die in einer nachfolgenden Transformationsebene weiter zu zerlegen sind, in dem Bildspeicher (41) und Daten von HH-, HL- und LH-Subbändern, die nicht weiter zu zerlegen sind, in dem Subbandspeicher (44) gespeichert werden, wobei die Daten des LL-Subbands durch Tiefpaßfilterung in beiden Dimensionen, die des HH-Subbands durch Hochpaßfilterung in beiden Dimensionen, die Daten des HL-Subbands durch Hochpaßfilterung in horizontaler und Tiefpaßfilterung in vertikaler Richtung und die Daten des LH-Subbands durch Tiefpaßfilterung in horizontaler und Hochpaßfilterung in vertikaler Richtung gewonnen werden.

4. Anordnung nach Anspruch 1, dadurch gekennzeichnet,
daß der Bildspeicher (41) und der Subbandspeicher (44) gemeinsam aufgebaut sind.

5. Anordnung nach Anspruch 1, dadurch gekennzeichnet,
daß diejenigen Subband-Daten, die nach einer Transformation einer Ebene in dem Subbandspeicher (44) gespeichert werden, zur weiteren Verarbeitung oder Übertragung freigegebenen werden, also aus dem Subbandspeicher (44) auslesbar sind.

6. Anordnung zur inversen Transformation von Bild-Daten, welche unter Einsatz eines Verfahrens zur zweidimensionalen hierarchischen Subband Zerlegung, insbesondere einer zweidimensionalen Discrete Wavelet Transformation (2-D DWT), bei dem Bilder, ggf. in mehreren Ebenen, mittels Filterung in Subbänder zerlegt wurden,
dadurch gekennzeichnet,
daß ein Bildspeicher (41) vorgesehen ist, in welchem vor der inversen Transformation dasjenige Subband eines rückzutransformierenden Bildes gespeichert wird, das bei der Transformation als letztes nicht mehr weiter zu transformierendes Subband erzeugt wurde,
daß ein Subbandspeicher (44) vorgesehen ist, in welchem vor der inversen Transformation alle übrigen Subbänder des Bildes gespeichert werden,
und daß die in dem Subbandspeicher (44) gespeicherten Subbänder nacheinander, ggf. unter Anwendung von Skalierungsfaktoren, dem im Bildspeicher (41) abgespeicherten Subband nach Durchführung der inversen Transformation aufaddiert werden, wobei nach jedem Additionsvorgang das vorher in dem ersten Bildspeicher (41) gespeicherte Subband bzw. vorherige Additionsergebnis durch das neue Additionsergebnis überschrieben wird.
